# EUROPÄISCHE PATENTSCHRIFT

(11) **EP 3 447 540 B1**
(45) Veröffentlichungstag und Bekanntmachung des Hinweises auf die Patenterteilung: **20.11.2019**
(21) Anmeldenummer: 18186741.7
(22) Anmeldetag: 01.08.2018
(51) Int. Cl.: G01V 8/20, F16P 3/14

(54) **LICHTVORHANG**
LIGHT CURTAIN
RIDEAU LUMINEUX

(30) Priorität: 23.08.2017 DE 102017119275
(43) Veröffentlichungstag der Anmeldung: 27.02.2019
(73) Patentinhaber: Sick AG, 79183 Waldkirch (DE)
(72) Erfinder: PFISTER, Michael, 79117 Freiburg (DE); HULM, Christian, 79194 Gundelfingen (DE); DOLD, Franz, 78120 Furtwangen (DE); EYERICH, Patrick, 79111 Freiburg (DE)

(56) Entgegenhaltungen:
- EP-A2- 1 321 706
- EP-A2- 1 443 343
- WO-A1-03/040755
- DE-A1-102004 055 229
- DE-A1-102012 101 368
- DE-T2- 69 225 487

## Beschreibung

Die vorliegende Erfindung betrifft einen Lichtvorhang nach dem Oberbegriff von Anspruch 1.

Ein solcher Lichtvorhang ist beispielsweise aus der DE 44 24 537 A1 bekannt.

Im Bereich der Mensch/Materialunterscheidung gibt es unterschiedliche Ansätze, um einen Prozessfluss zu ermöglichen, bei gleichzeitig gewährleisteter Sicherheit. Dies wird im Allgemeinen durch sogenannte Mutingfunktionen gelöst oder auch durch Mustererkennungsalgorithmen bei horizontal angebrachten Sicherheits-Lichtvorhängen. Ebenso gibt es auch Maßnahmen zur Erhöhung der Produktivität in der Pressenindustrie, wobei ein Taktbetrieb an den Pressen eingesetzt wird.

Die DE 10 2004 055 229 A1 offenbart ein Verfahren und eine Vorrichtung zur Absicherung gefährlicher Bereiche bei Maschinen der grafischen Industrie, wobei ein solcher gefährlicher Bereich mit wenigstens einem Sensor überwacht wird, welcher zur Identifikation von in den gefährlichen Bereich eindringenden Objekten geeignet ist und mit einer Maschinensteuerung in Verbindung steht. Es ist offenbart, dass beim Eindringen eines Objekts in den gefährlichen Bereich dieses Objekt mittels des Sensors identifiziert wird und in Abhängigkeit der Identifikation und des jeweiligen Betriebszustands der Maschine von der Maschinensteuerung auf den Zustand des gefährlichen Bereichs der Maschine eingewirkt wird.

Die EP 1 443 343 A2 offenbart einen optischen Sensor zur Erfassung von Objekten in einem Überwachungsbereich mit wenigstens einem Sendelichtstrahlen emittierenden Sender, wenigstens einem Empfangslichtstrahlen empfangenden Empfänger und einer Auswerteeinheit zur Auswertung der am Ausgang des Empfängers anstehenden Empfangssignale. Dabei sind mehrere Sicherheitsschaltausgänge vorgesehen, über welche jeweils ein Schaltsignal zur Steuerung eines Arbeitsgerätes ausgebbar ist. Die Schaltzustände eines Schaltsignals sind jeweils in Abhängigkeit der Detektion eines Objektes innerhalb wenigstens eines Schutzfeldes als Teil des Überwachungsbereichs bestimmt.

Die WO 03/040755 A1 offenbart ein Laserlichtgitter, welches eine einseitige Installation ermöglicht, um eine Person oder einen Gegenstand im Überwachungsbereich zu erfassen. Das Lichtgitter arbeitet mit punktförmigen Sensoreinheiten, die jeweils mindestens eine Laserdiode und zwei lichtempfindliche Pixel aufweisen und die in einem Gehäuse zeilenförmig angeordnet sind.

Die DE 10 2012 101 368 A1 offenbart einen Lichtvorhang zur Erfassung von Objekten innerhalb eines Überwachungsbereichs. Der Lichtvorhang weist eine Anordnung von Lichtstrahlen emittierenden Sendern, eine Anordnung von Lichtstrahlen empfangenden Empfängern und eine Auswerteeinheit auf. In der Auswerteeinheit werden in Abhängigkeit von Empfangssignalen an den Ausgängen von Empfängern Objektfeststellungssignale generiert. Der Lichtvorhang ist unterteilt in Bereiche mit jeweils einer vorgegebenen Anzahl von Sendern und Empfängern. Die einzelnen Bereiche sind durch separate Parametrierungen individuell einstellbar. Für die einzelnen Bereiche erfolgt in der Auswerteeinheit eine separate Auswertung.

Die EP 1 321 706 A2 offenbart eine berührungslos wirkende Schutzeinrichtung zur Sicherung eines Gefahrenbereichs einer Maschine. Die Schutzeinrichtung umfasst ein optisches Auswertefeld und eine Steuer- und Auswerteeinrichtung, die außer einem Sicherungsbetrieb, bei dem infolge eines jeweiligen Eingriffs in das Auswertefeld ein Wam- oder Maschinenstoppsignal erzeugt wird, einen Taktbetrieb ermöglicht, bei dem infolge wenigstens eines jeweiligen Eingriffs in das Auswertefeld ein Freigabesignal erzeugt wird, um einen jeweiligen Maschinenzyklus freizugeben, wobei für den Sicherungsbetrieb und für den Taktbetrieb ein und dasselbe Auswertefeld vorgesehen und die Steuer- und Auswerteeinrichtung so ausgelegt ist, dass nur ein Teil des Auswertefeldes sowohl für den Sicherungsbetrieb als auch für den Taktbetrieb überwacht wird.

Eine Aufgabe der Erfindung besteht darin, einen verbesserten Lichtvorhang bereitzustellen, wobei eine verbesserte Kombination von Automatisierungsfunktionen und Sicherheitsfunktionen bereitgestellt werden soll.

Die Aufgabe wird gemäß Anspruch 1 gelöst durch einen Lichtvorhang zur Erfassung von Objekten und/oder Personen innerhalb eines Überwachungsbereiches oder eines Schutzfeldes, mit einer Sendeeinheit mit Lichtstrahlen emittierenden Lichtsendern, mit einer Empfangseinheit mit Lichtstrahlen empfangenden Lichtempfängern und mit einer Steuer- und Auswerteeinheit, in welcher in Abhängigkeit von Empfangssignalen an den Ausgängen von den Lichtempfängern Objektfeststellungssignale generiert werden, wobei die Lichtsender und die Lichtempfänger jeweils äquidistant angeordnet sind, so dass die Lichtstrahlen zwischen Lichtsender und Lichtempfänger eine Auflösung des Lichtvorhangs bilden, wobei mindestens eine Überwachungszone einen ersten Teilbereich des Überwachungsbereiches des Lichtvorhangs bildet, wobei durch die Steuer- und Auswerteeinheit ein Sicherheitsabschaltsignal generiert wird bei einer Strahlunterbrechung in der Überwachungszone, wobei mindestens eine Warnungszone einen zweiten Teilbereich des Überwachungsbereiches des Lichtvorhangs bildet, wobei durch die Steuer- und Auswerteeinheit ein Warnsignal generiert wird bei einer Strahlunterbrechung in der Warnungszone, wobei mindestens eine Ausblendungszone einen dritten Teilbereich des Überwachungsbereiches des Lichtvorhangs bildet, wobei durch die Steuer- und Auswerteeinheit kein Sicherheitsabschaltsignal generiert wird bei einer Strahlunterbrechung in der Ausblendungszone, wobei durch die Steuer- und Auswerteeinheit nach einer Unterbrechung und anschließender Nichtunterbrechung der Lichtstrahlen der Ausblendungszone die Ausblendungszone zur Überwachungszone wird.

Gemäß der Erfindungsmeldung ist der Lichtvorhang in mindestens zwei Teilbereiche unterteilt, um anwendungsspezifische Funktionen im Sicherheitslichtvorhang zu ermöglichen. Durch die Warnungszone wird ein Anwender bzw. eine Person bei einem Eingriff gewarnt. Ein Eingriff in die Warnungszone führt noch nicht zu einer Gefährdung der Person. Die Warnungszone ist in einem Teilbereich des Lichtvorhangs angeordnet, an der keine direkte Gefährdung einer Person vorliegen darf. Die Überwachungszone ist jedoch zum Schutz der Personen vor einer Gefährdung vorgesehen. Damit ist es möglich, dass eine Person sehr dicht an der Gefahrenstelle arbeiten kann und beispielsweise in die Überwachungszone eingreifen kann, beispielsweise um Material zuzuführen, gleichzeitig jedoch auch gewarnt wird, dass der Eingriff nahe der Überwachungszone erfolgt.

Bei dem Lichtvorhang handelt es sich um ein Sicherheitssystem gemäß Maschinensicherheit, beispielsweise gemäß der Norm EN/ISO 13849-1 bzw. der Norm EN/IEC 62061, die beispielsweise den Rahmen für funktionale Sicherheit von sicherheitsbezogenen elektrischen Steuerungssystemen und deren Untersystemen an Maschinen bereitstellt. Bei dem Lichtvorhang handelt es sich beispielsweise um eine sichere berührungslose Schutzeinrichtung bzw. einen sicheren optoelektronischen Sensor gemäß EN 61496-1/2.

Damit erfolgt erfindungsgemäß durch den Lichtvorhang eine Unterscheidung zwischen einer Strahlunterbrechung in der Überwachungszone, bei dem ein Sicherheitsabschaltsignal generiert wird und einer Strahlunterbrechung in einer Warnungszone bei dem nur ein Warnsignal ausgegeben wird.

Jeder der Teilbereiche wird durch eine bestimmte Anzahl von aufeinanderfolgenden Lichtsendern bzw. Lichtempfängern als aufeinanderfolgende Sender-/Empfängerpaare gebildet.

Das Sicherheitsabschaltsignal wird über Ausgangsschaltelemente ausgegeben. Die Ausgangsschaltelemente werden üblicherweise mit einer Maschinensteuerung verbunden. Aus Sicherheitsgründen sind die Ausgangsschaltelemente redundant vorhanden, so dass zwei Ausgangsschaltelemente als Paar vorgesehen sind. Sobald nur ein Ausgangsschaltelement abschaltet, also beispielsweise von einem High-Pegel beispielsweise 24 Volt auf einen Low-Pegel beispielsweise Null-Volt schaltet, wird eine angeschlossene Maschine abgeschaltet. Das Ausgangsschaltelement wird auch als OSSD bezeichnet, wobei OSSD für ,Output Signal Switching Device' steht.

Das Warnsignal wird bevorzugt als Meldung nach außen ausgegeben. Beispielsweise wird eine visuelle Meldung über eine Anzeigelampe bzw. Warnlampe ausgegeben und/oder eine akustische Warnmeldung.

Hierbei wird dem Anwender signalisiert, dass er sich dem Teilbereich nähert, der eine Sicherheitsfunktion auslöst.

Das Warnsignal kann ebenfalls beispielsweise über Ausgangsschaltelemente ausgegeben werden. Die Ausgangsschaltelemente werden üblicherweise mit einer Maschinensteuerung verbunden. Es kann sich hierbei auch um redundante Ausgangsschaltelemente handeln.

Gemäß der Erfindung wird ein Manipulationsschutz verbessert und eine Verfügbarkeit der Anlage verbessert, wodurch ein Produktivitätsgewinn entsteht.

In Weiterbildung der Erfindung wird bei einer Strahlunterbrechung in der Warnungszone (12), welche eine vorgegebene Zeitdauer überschreitet, durch die Steuer- und Auswerteeinheit (9) ein Sicherheitsabschaltsignal generiert.

Dadurch wird die Warnungszone quasi ab einer bestimmten Dauer des Eingriffs zur Überwachungszone. Es wird dabei davon ausgegangen, dass der Eingriff nicht mehr nur kurzzeitig erfolgt, sondern dass ungewöhnliche Umstände zu einer Verlängerung des Eingriffs geführt haben und dadurch möglicherweise eine Gefährdung vorliegen kann, weshalb ein Sicherheitsabschaltsignal erfolgt.

In Weiterbildung der Erfindung bildet mindestens eine Taktbetriebszone einen weiteren Teilbereich des Überwachungsbereiches des Lichtvorhangs, wobei durch die Steuer- und Auswerteeinheit bei einer Strahlunterbrechung in der Taktbetriebszone ein Arbeitstakt registriert wird zu Steuerung einer Maschine.

Beispielsweise ist die Taktbetriebszone für den Taktbetrieb einer Presse vorgesehen. So kann eine Ausblendungszone dazu dienen, das Material in eine Maschine oder Presse einzubringen. Das ist beispielsweise typischerweise der unterste Bereich des Überwachungsbereiches, wo beispielsweise Bleche eingeführt werden. In einer Taktbetriebszone darf bzw. muss dann ein manueller Eingriff vom Bediener erfolgen, um einen automatischen Start der Maschine oder Presse zu erlauben. Hintergrund ist hier die Unterscheidung zwischen einem unbeabsichtigten Start der Presse durch eine Materialeinführung, zu einem durch den Bediener bewusst durchgeführten Starteingriff.

Die jeweiligen Statusinformationen der Bereiche können wiederum im Lichtvorhang selbst in der Steuer- und Auswerteeinheit verarbeitet werden oder über entsprechende Schnittstellen in eine externe Sicherheitssteuerung übertragen werden, um dann den Maschinenstart entsprechend sicher frei zu geben. Zusätzlich kann eine Warnungszone, die zwischen der definierten Taktbetriebszone und den Überwachungszonen liegt, die Verfügbarkeit erhöhen, da dem Bediener angezeigt werden kann, wenn er im Begriff ist, die Taktbetriebszone zu verlassen.

Gemäß der Erfindung bildet mindestens eine Ausblendungszone einen dritten Teilbereich des Überwachungsbereiches des Lichtvorhangs, wobei durch die Steuer- und Auswerteeinheit bei einer Strahlunterbrechung in der Ausblendungszone kein Sicherheitsabschaltsignal generiert wird.

Eine Ausblendungszone kann beispielsweise vorgesehen sein, wenn Teilbereiche des Lichtvorhangs dauerhaft unterbrochen sind, beispielsweise durch notwendige Vorrichtungen wie Werkzeugtische oder Ähnliches. Auch Werkzeuge, die temporär in den Überwachungsbereich gelangen, können über Ausblendungszonen berücksichtigt werden, so dass kein Sicherheitsschaltsignal und kein Warnsignal erzeugt wird.

Gemäß der Erfindung wird durch die Steuer- und Auswerteeinheit nach einer Unterbrechung und anschließender Nichtunterbrechung von Lichtstrahlen einer Ausblendungszone die Ausblendungszone zur Überwachungszone.

Beispielsweise können hierdurch auch Objekte, die von einer Seite zur anderen Seite immer nur kleiner werden, sicher durch den Lichtvorhang transportiert werden. Hier könnten mehre Ausblendungszonen konfiguriert werden, die jeweils nach einer Unterbrechung und anschließender Nichtunterbrechung der Ausblendungszone durch die Steuer- und Auswerteeinheit von einer Ausblendungszone zur Überwachungszone werden.

Zu Beginn der Ausblendung sind alle Ausblendungszonen aktiv. Sobald die oberste Ausblendungszone frei wird, wird diese wieder zur Überwachungszone und aktiv überwacht, während die weiteren Ausblendungszonen weiter aktiv sind. So wird das bei allen weiteren Ausblendungszonen fortgesetzt, so dass die Ausblendungszonen nach und nach von oben nach unten von Ausblendungszonen durch die Steuer- und Auswerteeinheit in Überwachungszonen umgeschaltet werden. Sollte sich ein Objekt durch das Schutzfeld bewegen, welches nicht der geforderten Form entspricht, wird dies detektiert.

Dadurch können Objekte sicher durch den Überwachungsbereich transportiert werden, deren Kontur sprunghaft zu- oder abnimmt. Hierbei kann beispielsweise eine zulässige Papierrolle durch den Lichtvorhang transportiert werden, welche beispielsweise eine Haltevorrichtung aufweist, welche abweichend von der kontinuierlichen Kontur der Papierrolle Sprungstellen aufweist.

Der Lichtvorhang kann auch schräg zur Bewegungsrichtung angeordnet werden.

Gemäß einer bevorzugten Ausführungsform sind die Teilbereiche durch die Steuer- und Auswerteeinheit nebeneinander angeordnet. Dabei kann beispielsweise zentral eine Überwachungszone angeordnet sein und daneben jeweils eine Warnungszone.

In Weiterbildung der Erfindung ist mindestens eine Statusinformation mindestens eines Teilbereiches durch die Steuer- und Auswerteeinheit über eine Schnittstelle ausgebbar.

Über Schnittstellen werden die Statusinformationen beispielsweise an eine Maschinensteuerung zur logischen Verknüpfung übergeben. Bei der Schnittstelle kann es sich um Ausgänge, kombinierte Ein-/Ausgänge, IO-Link, Feldbusse, Profinet, Ethernet IP, EtherCat oder ähnliche Schnittstellen handeln.

In Weiterbildung der Erfindung wird mindestens eine Position und/oder mindestens eine Größe der Teilbereiche (11, 13, 15, 17) von der Steuer- und Auswerteeinheit (9) kontinuierlich veränderlich eingestellt.

Dadurch können Objekte, die sich in der Größe oder Position kontinuierlich verändern, überwacht werden. Ein Eingriff in den ersten Teilbereich, also die Überwachungszone, welche eine nichtkontinuierliche Größen- oder Positionsveränderung darstellt, wird detektiert und führt damit zu einem sofortigen Stillsetzen der Maschine.

Ein Eingriff in den zweiten Teilbereich, also die Warnungszone, welche eine nichtkontinuierliche Größen- oder Positionsveränderung darstellt, wird detektiert und führt zunächst zu einem Warnsignal.

Es kann jedoch auch vorgesehen sein, dass ein Eingriff in den zweiten Teilbereich, also die Warnungszone, welcher eine nichtkontinuierliche Größen- oder Positionsveränderung darstellt, detektiert wird und zu einer reduzierten, nicht gefährlichen Geschwindigkeit der Maschine führt.

Es kann jedoch auch vorgesehen sein, dass ein Eingriff in den zweiten Teilbereich, also die Warnungszone, welcher eine nichtkontinuierliche Größen- oder Positionsveränderung darstellt, detektiert wird und zu einem sofortigen Stillsetzen der Maschine führt.

Beispielsweise wird eine Papierrolle oder ein ähnlicher veränderlicher Gegenstand im Überwachungsbereich aufgewickelt oder abgewickelt. Dabei wird eine kontinuierliche Zu- oder Abnahme der Papierrolle oder des Gegenstandes als sicher und zulässig angesehen. Wenn jedoch bei einem Eingriff einer Person, beispielsweise einer Bedienperson, beispielsweise beim Glattstreichen der Rollenbahn ein Einzug in die Maschine droht, wird aufgrund des diskontinuierlichen Eingriffs die Maschine unverzüglich angehalten.

Auch Fehler, die durch die Papierrolle selbst hervorgerufen werden, beispielsweise ein Verknüllen des Papiers aufgrund eines Produktionsfehlers, wird somit erkannt und die Maschine abgeschaltet oder zumindest in einer nicht gefährlichen Geschwindigkeit betrieben.

In Weiterbildung der Erfindung wird mindestens eine Position und/oder mindestens eine Größe der Teilbereiche von der Steuer- und Auswerteeinheit abhängig von mindestens einem externen Signal über eine Schnittstelle eingestellt.

Dadurch wird ein Manipulationsschutz verbessert. Durch den externen Trigger bzw. das externe Signal werden am Lichtvorhang genau jene Strahlen deaktiviert bzw. ausgeblendet, die notwendig sind, um ein Transportgut passieren zu lassen. Eine zusätzlich mit dem Transportgut mitfahrende Person wird durch die weiterhin aktiven Lichtstrahlen detektiert und führt damit zum Auslösen eines Sicherheitsabschaltsignals.

Weiter ist es dadurch auch beispielsweise möglich, Überwachungszonen umzuschalten. Beispielsweise in Abhängigkeit einer Materialflussrichtung. So kann eine leere Palette in die Maschine eingefahren werden und der Lichtvorhang bzw. die Steuer- und Auswerteeinheit blendet nur den Bereich der Palettenhöhe aus. Wenn die Palette gefüllt ist und wieder ausgefahren werden soll, wird die definierte Palettenhöhe überwacht. Hiermit kann insbesondere vermieden bzw. erkannt werden, dass sich beim Einfahren der Palette keine Personen auf dieser befinden.

Gleichermaßen kann aber auch eine Automatisierungsfunktion erreicht werden, indem ein Teilbereich, der sich über der definierten Palettenhöhe befindet, überwacht wird, um zu erkennen, ob eine Überladung erfolgt ist, die ggf. prozesstechnische Risiken birgt. Eine vorteilhafte Lösung ist hierbei, wenn der Lichtvorhang in mehrere Feldsegmente aufteilbar ist.

Vorteilhaft ist hierbei, wenn der Lichtvorhang in mehrere Teilbereiche aufteilbar ist und den jeweiligen Status des Teilbereiches in der Steuer- und Auswerteeinheit in Abhängigkeit von Systemzuständen oder einer Materialflussrichtung überwacht.

In Weiterbildung der Erfindung werden die Position und/oder die Größe der Teilbereiche von der Steuer- und Auswerteeinheit abhängig von mindestens einem Sensorsignal eingestellt. Hierbei ergeben sich ähnliche Vorteile wie vorgenannt zum externen Signal. Das externe Signal wird quasi durch ein Sensorsignal gebildet.

In Weiterbildung der Erfindung werden die Position und/oder die Größe der Teilbereiche von der Steuer- und Auswerteeinheit abhängig von einem Programm einer Maschinensteuerung eingestellt.

Hierbei ergeben sich ähnliche Vorteile wie vorgenannt zum externen Signal. Das externe Signal wird quasi durch das Programm der Maschinensteuerung gebildet.

Dadurch wird ebenfalls ein Manipulationsschutz verbessert. Durch das Programm werden am Lichtvorhang genau jene Strahlen deaktiviert bzw. ausgeblendet, die notwendig sind, um ein Transportgut passieren zu lassen. Eine zusätzlich mit dem Transportgut mitfahrende Person wird durch die weiterhin aktiven Lichtstrahlen detektiert und führt damit zum Auslösen eines Sicherheitsabschaltsignals.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
Figur 1 und 2 jeweils einen nicht-erfindungsgemäßen Lichtvorhang
Figur 3 einen Lichtvorhang gemäß der Erfindung
Figur 4 einen weiteren nicht-erfindungsgemäßen Lichtvorhang

In den nachfolgenden Figuren sind identische Teile mit identischen Bezugszeichen versehen.

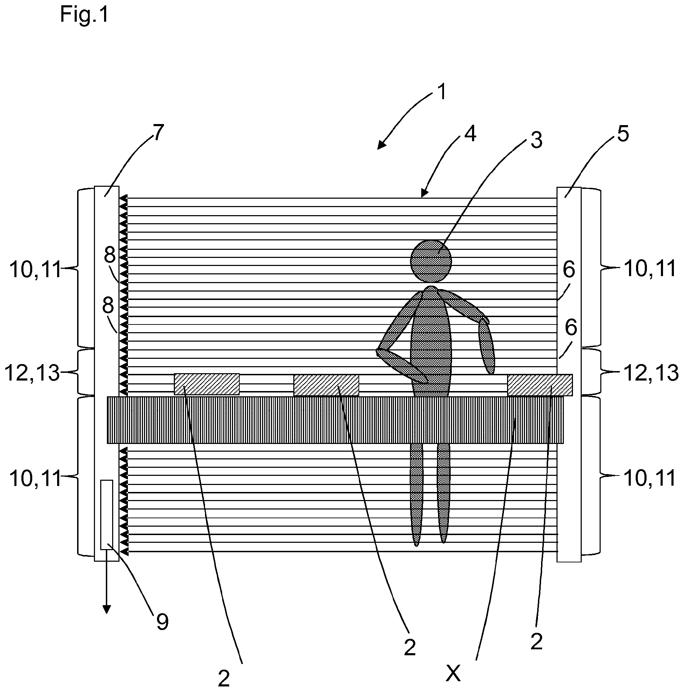

Figur 1 zeigt einen Lichtvorhang 1 zur Erfassung von Objekten 2 und/oder Personen 2 innerhalb eines Überwachungsbereiches 4 oder eines Schutzfeldes, mit einer Sendeeinheit 5 mit Lichtstrahlen emittierenden Lichtsendern 6, mit einer Empfangseinheit 7 mit Lichtstrahlen empfangenden Lichtempfängern 8 und mit einer Steuer- und Auswerteeinheit 9, in welcher in Abhängigkeit von Empfangssignalen an den Ausgängen von den Lichtempfängern Objektfeststellungssignale generiert werden, wobei die Lichtsender 6 und die Lichtempfänger 8 jeweils äquidistant angeordnet sind, so dass die Lichtstrahlen zwischen Lichtsender 6 und Lichtempfänger 8 eine Auflösung des Lichtvorhangs 1 bilden, wobei mindestens eine Überwachungszone 10 einen ersten Teilbereich 13 des Überwachungsbereiches 4 des Lichtvorhangs 1 bildet, wobei bei einer Strahlunterbrechung in der Überwachungszone 4 durch die Steuer- und Auswerteeinheit 9 ein Sicherheitsabschaltsignal generiert wird, mindestens eine Warnungszone 12 einen zweiten Teilbereich 13 des Überwachungsbereiches 4 des Lichtvorhangs 1 bildet, wobei bei einer Strahlunterbrechung in der Warnungszone 12 durch die Steuer- und Auswerteeinheit 9 ein Warnsignal generiert wird.

Durch die Warnungszone 12 wird eine Person 3 bei einem Eingriff gewarnt. Ein Eingriff in die Warnungszone 12 führt noch nicht zu einer Gefährdung der Person 3. Die Warnungszone 12 ist in einem zweiten Teilbereich 13 des Lichtvorhangs 1 angeordnet, an der keine direkte Gefährdung einer Person 3 vorliegen darf. Die Überwachungszone 10 ist jedoch zum Schutz der Person 3 vor einer Gefährdung vorgesehen. Damit ist es möglich, dass die Person 3 sehr dicht an der Gefahrenstelle arbeiten kann und beispielsweise in die Überwachungszone 10 eingreifen kann, beispielsweise um Material zuzuführen, gleichzeitig jedoch auch gewarnt wird, dass der Eingriff nahe der Überwachungszone 10 erfolgt.

Jeder der Teilbereiche wird durch eine bestimmte Anzahl von aufeinanderfolgenden Lichtsendern 6 bzw. Lichtempfängern 8 als aufeinanderfolgende Sender-/Empfängerpaare gebildet.

Das Sicherheitsabschaltsignal wird durch die Steuer- und Auswerteeinheit über Ausgangsschaltelemente ausgegeben. Die Ausgangsschaltelemente werden üblicherweise mit einer Maschinensteuerung verbunden.

Das Warnsignal wird bevorzugt als Meldung nach außen ausgegeben. Beispielsweise wird eine visuelle Meldung über eine Anzeigelampe bzw. Warnlampe ausgegeben und/oder eine akustische Warnmeldung.

Hierbei wird der Person signalisiert, dass sie sich dem Teilbereich nähert, der eine Sicherheitsfunktion auslöst.

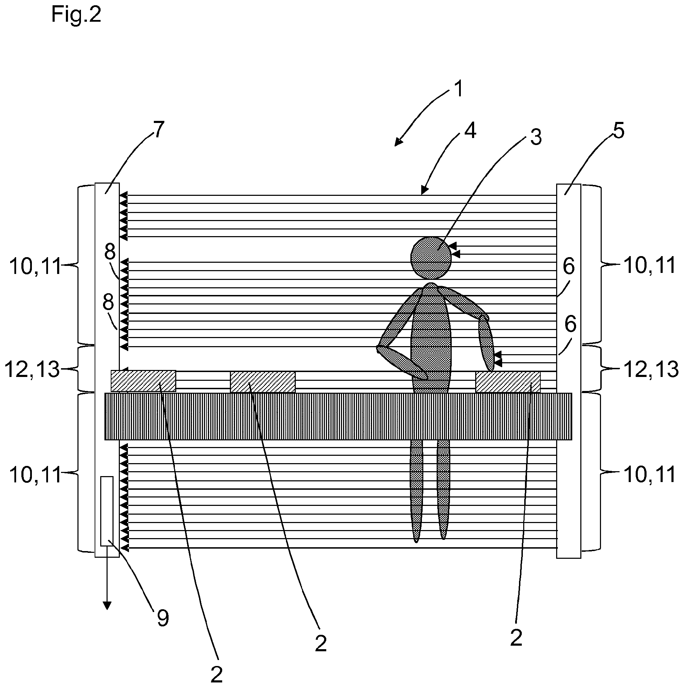

Gemäß Figur 2 wird bei einer Strahlunterbrechung in der Warnungszone 12, welche eine vorgegebene Zeitdauer überschreitet, durch die Steuer- und Auswerteeinheit 9 ein Sicherheitsabschaltsignal generiert. Eine Unterbrechung der Überwachungszone 10 gemäß Figur 2 führt direkt zu einem Sicherheitsabschaltsignal.

Dadurch wird die Warnungszone 12 quasi ab einer bestimmten Dauer des Eingriffs zur Überwachungszone 10. Es wird dabei davon ausgegangen, dass der Eingriff nicht mehr nur kurzzeitig erfolgt, sondern dass ungewöhnliche Umstände zu einer Verlängerung des Eingriffs geführt haben und dadurch möglicherweise eine Gefährdung vorliegen kann, weshalb ein Sicherheitsabschaltsignal erfolgt.

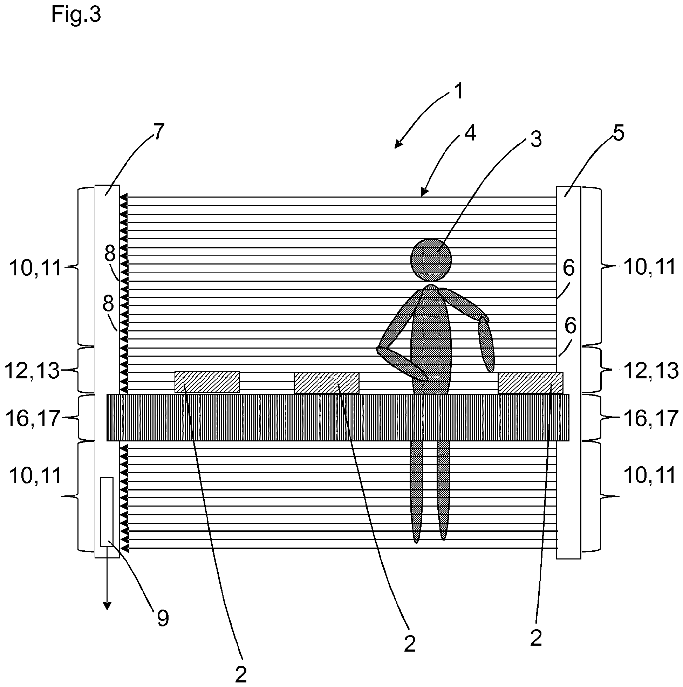

Gemäß Figur 3 bildet mindestens eine Ausblendungszone 16 einen weiteren Teilbereich 17 des Überwachungsbereiches 4 des Lichtvorhangs 1, wobei bei einer Strahlunterbrechung in der Ausblendungszone 16 durch die Steuer- und Auswerteeinheit 9 kein Sicherheitsabschaltsignal generiert wird.

Eine Ausblendungszone 16 kann beispielsweise vorgesehen sein, wenn Teilbereiche des Lichtvorhangs 1 dauerhaft unterbrochen sind, beispielsweise durch notwendige Vorrichtungen wie Werkzeugtische oder Ähnliches.

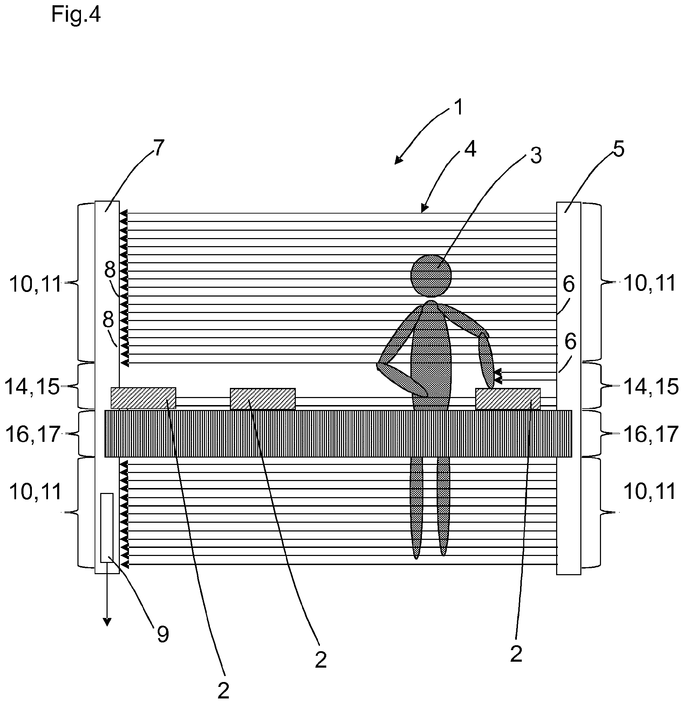

Gemäß Figur 4 bildet mindestens eine Taktbetriebszone 14 einen dritten Teilbereich 15 des Überwachungsbereiches 4 des Lichtvorhangs 1, wobei bei einer Strahlunterbrechung in der Taktbetriebszone 14 durch die Steuer- und Auswerteeinheit 9 ein Arbeitstakt registriert wird zu Steuerung der Maschine.

So kann eine Ausblendungszone 16 dazu dienen, das Material in eine Maschine einzubringen. In einer Taktbetriebszone 14 darf bzw. muss dann ein manueller Eingriff vom Bediener erfolgen, um einen automatischen Start der Maschine zu erlauben.

### Bezugszeichen:

1 Lichtvorhang
2 Objekte
3 Personen
4 Überwachungsbereich
5 Sendeeinheit
6 Lichtsender
7 Empfangseinheit
8 Lichtempfänger
9 Steuer- und Auswerteeinheit
10 Überwachungszone
11 erster Teilbereich
12 Warnungszone
13 zweiter Teilbereich
14 Taktbetriebszone
15 dritter Teilbereich
16 Ausblendungszone
17 weiterer Teilbereich

## Patentansprüche

1. Lichtvorhang (1) zur Erfassung von Objekten (2) und/oder Personen (3) innerhalb eines Überwachungsbereiches (4) oder eines Schutzfeldes, mit einer Sendeeinheit (5) mit Lichtstrahlen emittierenden Lichtsendern (6), mit einer Empfangseinheit (7) mit Lichtstrahlen empfangenden Lichtempfängern (8) und mit einer Steuer- und Auswerteeinheit (9), in welcher in Abhängigkeit von Empfangssignalen an den Ausgängen von den Lichtempfängern (8) Objektfeststellungssignale generiert werden, wobei die Lichtsender (6) und die Lichtempfänger (8) jeweils äquidistant angeordnet sind, so dass die Lichtstrahlen zwischen Lichtsender (6) und Lichtempfänger (8) eine Auflösung des Lichtvorhangs (1) bilden,
wobei mindestens eine Überwachungszone (10) einen ersten Teilbereich (11) des Überwachungsbereiches (4) des Lichtvorhangs (1) bildet, wobei durch die Steuer- und Auswerteeinheit (9) ein Sicherheitsabschaltsignal generiert wird bei einer Strahlunterbrechung in der Überwachungszone (10),
wobei mindestens eine Warnungszone (12) einen zweiten Teilbereich (13) des Überwachungsbereiches (4) des Lichtvorhangs (1) bildet, wobei durch die Steuer- und Auswerteeinheit (9) ein Warnsignal generiert wird bei einer Strahlunterbrechung in der Warnungszone (12), wobei mindestens eine Ausblendungszone (16) einen dritten Teilbereich (17) des Überwachungsbereiches (4) des Lichtvorhangs (1) bildet, wobei durch die Steuer- und Auswerteeinheit (9) kein Sicherheitsabschaltsignal generiert wird bei einer Strahlunterbrechung in der Ausblendungszone (16), **dadurch gekennzeichnet, dass** durch die Steuer- und Auswerteeinheit (9) nach einer Unterbrechung und anschließender Nichtunterbrechung der Lichtstrahlen der Ausblendungszone (16) die Ausblendungszone (16) zur Überwachungszone (10) wird.

2. Lichtvorhang nach Anspruch 1, **dadurch gekennzeichnet, dass** bei einer Strahlunterbrechung in der Warnungszone (12), welche eine vorgegebene Zeitdauer überschreitet, durch die Steuer- und Auswerteeinheit (9) ein Sicherheitsabschaltsignal generiert wird.

3. Lichtvorhang nach mindestens einem der vorhergehenden Ansprüche, **dadurch gekennzeichnet, dass** mindestens eine Taktbetriebszone (14) einen weiteren Teilbereich (15) des Überwachungsbereiches (4) des Lichtvorhangs (1) bildet, wobei durch die Steuer- und Auswerteeinheit (9) ein Arbeitstakt registriert wird zur Steuerung einer Maschine bei einer Strahlunterbrechung in der Taktbetriebszone (14).

4. Lichtvorhang nach mindestens einem der vorhergehenden Ansprüche, **dadurch gekennzeichnet, dass** die Teilbereiche (11, 13, 15, 17) durch die Steuer- und Auswerteeinheit (9) nebeneinander angeordnet sind.

5. Lichtvorhang nach mindestens einem der vorhergehenden Ansprüche, **dadurch gekennzeichnet, dass** mindestens eine Statusinformation mindestens eines Teilbereiches (11, 13, 15, 17) durch die Steuer- und Auswerteeinheit (9) über eine Schnittstelle ausgebbar ist.

6. Lichtvorhang nach mindestens einem der vorhergehenden Ansprüche, **dadurch gekennzeichnet, dass** mindestens eine Position und/oder mindestens eine Größe der Teilbereiche (11, 13, 15, 17) von der Steuer- und Auswerteeinheit (9) kontinuierlich veränderlich eingestellt werden.

7. Lichtvorhang nach mindestens einem der vorhergehenden Ansprüche, **dadurch gekennzeichnet, dass** mindestens eine Position und/oder mindestens eine Größe der Teilbereiche (11, 13, 15, 17) von der Steuer- und Auswerteeinheit (9) abhängig von mindestens einem externen Signal über eine Schnittstelle (18) eingestellt werden.

8. Lichtvorhang nach mindestens einem der vorhergehenden Ansprüche, **dadurch gekennzeichnet, dass** die Position und/oder die Größe der Teilbereiche (11, 13, 15, 17) von der Steuer- und Auswerteeinheit (9) abhängig von mindestens einem Sensorsignal eingestellt wird.

9. Lichtvorhang nach mindestens einem der vorhergehenden Ansprüche, **dadurch gekennzeichnet, dass** die Position und/oder die Größe der Teilbereiche (11, 13, 15, 17) von der Steuer- und Auswerteeinheit (9) abhängig von einem Programm einer Maschinensteuerung eingestellt werden.

## Claims

1. A light curtain (1) for detecting objects (2) and/or persons (3) within a monitored zone (4) or within a protected field, having a transmission unit (5) with light transmitters (6) emitting light beams, having a reception unit (7) with light receivers (8) receiving light beams, and having a control and evaluation unit (9) in which object determination signals are generated in dependence on received signals at the outputs of the light receivers (9), wherein the light transmitters (6) and the light receivers (8) are each arranged equidistantly so that the light beams form a resolution of the light curtain (1) between the light transmitter (6) and the light receiver (8); wherein at least one monitored zone (10) forms a first partial zone (11) of the monitored zone (4) of the light curtain (1), with a safety shutdown signal being generated by the control and evaluation unit (9) on a beam interruption in the monitored zone (10);
wherein at least one warning zone (12) forms a second partial zone (13) of the monitored zone (4) of the light curtain (1), with a warning signal being generated by the control and evaluation unit (9) on a beam interruption in the warning zone (12); and wherein at least one masking zone (16) forms a third partial zone (17) of the monitored zone (4) of the light curtain (1), with no safety shutdown signal being generated by the control and evaluation unit (9) on a beam interruption in the masking zone (16), **characterized in that** after an interruption and a subsequent non-interruption of the light beams of the masking zone (16), the masking zone (16) is made into the monitored zone (10) by the control and evaluation unit (9).

2. A light curtain in accordance with claim 1, **characterized in that** on a beam interruption in the warning zone (12) that exceeds a predetermined time duration, a safety shutdown signal is generated by the control and evaluation unit (9).

3. A light curtain in accordance with at least one of the preceding claims, **characterized in that** at least one cyclic operating zone (14) forms a further partial zone (15) of the monitored zone (4) of the light curtain (1), with a work cycle being registered by the control and evaluation unit (9) to control a machine on a beam interruption in the cyclic operating zone (14).

4. A light curtain in accordance with at least one of the preceding claims, **characterized in that** the partial zones (11, 13, 15, 17) are arranged next to one another by the control and evaluation unit (9).

5. A light curtain in accordance with at least one of the preceding claims, **characterized in that** at least one piece of status information of at least one partial zone (11, 13, 15, 17) can be output via an interface by the control and evaluation unit (9).

6. A light curtain in accordance with at least one of the preceding claims, **characterized in that** at least one position and/or at least one size of the partial zones (11, 13, 15, 17) is/are set in a continuously variable manner by the control and evaluation unit (9).

7. A light curtain in accordance with at least one of the preceding claims, **characterized in that** at least one position and/or at least one size of the partial zones (11, 13, 15, 17) is/are set via an interface (11) by the control and evaluation unit (9) in dependence on at least one signal.

8. A light curtain in accordance with at least one of the preceding claims, **characterized in that** the position and/or the size of the partial zones (11, 13, 15, 17) is/ are set by the control and evaluation unit (9) in dependence on at least one sensor signal.

9. A light curtain in accordance with at least one of the preceding claims, **characterized in that** the position and/or the size of the partial zones (11, 13, 15, 17) is/are set by the control and evaluation unit (9) in dependence on a program of a machine control.

## Revendications

1. Rideau lumineux (1) pour détecter des objets (2) et/ou des personnes (3) à l'intérieur d'une zone à surveiller (4) ou d'un champ de protection, comportant une unité d'émission (5) pourvue d'émetteurs de lumière (6) émettant des faisceaux lumineux, une unité de réception (7) pourvue de récepteurs de lumière (8) recevant des faisceaux lumineux, et une unité de commande et d'évaluation (9) dans laquelle des signaux de constatation d'objet sont générés en fonction de signaux de réception aux sorties des récepteurs de lumière (8), les émetteurs de lumière (6) et les récepteurs de lumière (8) étant disposés chacun de façon équidistante, de sorte que les faisceaux lumineux entre les émetteurs de lumière (6) et les récepteurs de lumière (8) forment une résolution du rideau lumineux (1),
dans lequel
au moins une région à surveiller (10) constitue une première zone partielle (11) de la zone à surveiller (4) du rideau lumineux (1), un signal de coupure de sécurité étant généré par l'unité de commande et d'évaluation (9) lors d'une interruption du faisceau dans la région à surveiller (10),
au moins une région d'alerte (12) constitue une seconde zone partielle (13) de la zone à surveiller (4) du rideau lumineux (1), un signal d'alerte étant généré par l'unité de commande et d'évaluation (9) lors d'une interruption du faisceau dans la région d'alerte (12),
au moins une région de masquage (16) constitue une troisième zone partielle (17) de la zone à surveiller (4) du rideau lumineux (1), aucun signal de coupure de sécurité n'étant généré par l'unité de commande et d'évaluation (9) lors d'une interruption du faisceau dans la région de masquage (16),
**caractérisé en ce que**
grâce à l'unité de commande et d'évaluation (9), après une interruption et une non-interruption suivante des faisceaux lumineux de la région de masquage (16), la région de masquage (16) devient la région à surveiller (10).

2. Rideau lumineux selon la revendication 1, **caractérisé en ce que** lors d'une interruption du faisceau dans la région d'alerte (12) dépassant une durée temporelle prédéterminée, un signal de coupure de sécurité est généré par l'unité de commande et d'évaluation (9).

3. Rideau lumineux selon l'une au moins des revendications précédentes, **caractérisé en ce que** au moins une région de fonctionnement cadencé (14) constitue une autre zone partielle (15) de la zone à surveiller (4) du rideau lumineux (1), une cadence de travail étant enregistrée par l'unité de commande et d'évaluation (9) pour commander une machine, lors d'une interruption du faisceau dans la région de fonctionnement cadencé (14).

4. Rideau lumineux selon l'une au moins des revendications précédentes, **caractérisé en ce que** les zones partielles (11, 13, 15, 17) sont disposées les unes à côté des autres grâce à l'unité de commande et d'évaluation (9).

5. Rideau lumineux selon l'une au moins des revendications précédentes, **caractérisé en ce que** au moins une information d'état d'au moins une zone partielle (11, 13, 15, 17) peut être émise par l'unité de commande et d'évaluation (9) via une interface.

6. Rideau lumineux selon l'une au moins des revendications précédentes, **caractérisé en ce que** au moins une position et/ou au moins une grandeur des zones partielles (11, 13, 15, 17) sont réglées de façon variable en continu par l'unité de commande et d'évaluation (9).

7. Rideau lumineux selon l'une au moins des revendications précédentes, **caractérisé en ce que** au moins une position et/ou au moins une grandeur des zones partielles (11, 13, 15, 17) sont réglées en fonction d'au moins un signal externe par l'unité de commande et d'évaluation (9) via une interface (18).

8. Rideau lumineux selon l'une au moins des revendications précédentes, **caractérisé en ce que** la position et/ou la grandeur des zones partielles (11, 13, 15, 17) est réglée en fonction d'au moins un signal de capteur par l'unité de commande et d'évaluation (9).

9. Rideau lumineux selon l'une au moins des revendications précédentes, **caractérisé en ce que** la position et/ou la grandeur des zones partielles (11, 13, 15, 17) est réglée en fonction d'un programme d'une commande de machine par l'unité de commande et d'évaluation (9).
